# EUROPEAN PATENT APPLICATION

(11) **EP 0 521 567 A1**
(43) Date of publication of application: **07.01.1993**
(21) Application number: 92201933.6
(22) Date of filing: 30.06.1992
(51) Int. Cl.: B65G 33/32

(54) **Helix support means, in particular intermediate support means, for screw conveyors**

(30) Priority: 01.07.1991 IT RE910057
(71) Applicant: WAM S.p.A., I-41030 Cavezzo (Modena) (IT)
(72) Inventor: Vainer, Marchesini, I-41030 Cavezzo (Modena) (IT)
(74) Representative: Corradini, Corrado

(57) **Abstract**

Along a determined axial portion in which rotary engagement is required between the tubular casing (2) and the helix (4) there is provided at least one longitudinally extending supplementary element (10) spirally wound about the screw helix (4) with the same direction of inclination as this latter and with its turns spaced apart, said supplementary element (10) having its longitudinal outer edge (11) tangential to a surface of revolution substantially mating with the inner surface (3) of the tubular casing (2) within the same axial portion A, said supplementary element (10) being rigidly joined to the screw helix (4) and being in sliding contact with the inner surface (3) of the tubular casing (2).

## Description

This invention relates to screw conveyors of the type comprising a tubular casing provided with an inner surface of revolution (usually a cylindrical surface), and a coaxial helix rotating within and relative to the tubular casing.

The screw helix is fixed about a shaft provided with suitable support means to connect together the casing and helix shaft such that this latter can rotate about its axis relative to the casing.

In addition to one or more support means for supporting both radial and axial thrusts and located at one or both ends of the shaft, further support means can be provided to support substantially only radial thrusts, and located in particular in an intermediate position, these latter being provided when the shaft length is relatively long and such as to require intermediate restraint against the radial oscillation of the shaft.

The present invention relates to such support means for supporting substantially only radial thrusts, and in particular to the intermediate support means.

Known intermediate support means comprise a bearing coupled to the helix shaft and fixed to the tubular casing by radial elements. The helix is necessarily lacking along the portion in which the bearing is coupled to the shaft.

At these intermediate support means, because of the presence of the radial elements and the absence of the helix portion, the screw operation is of relatively poor efficiency, ie the screw conveying capacity is reduced. This is particularly the case when the screw operates with its axis vertical or at considerable inclination and at high speed. In such a case there is a considerable reduction in conveying efficiency because of the intermediate surface, to the extent that some types of material (such as sludge, filament material etc.) cannot be conveniently raised with such screw conveyors.

The object of the present invention is to provide a support means of the stated type, in particular an intermediate support means especially for screw conveyors operating with their axis vertical or at considerable inclination, which is able to obviate the aforesaid drawbacks within the framework of a constructionally simple and operationally reliable structure.

Said object is attained according to the invention as characterised in the claims.

The invention is described in detail hereinafter with reference to the accompanying drawings, which illustrate one embodiment thereof.

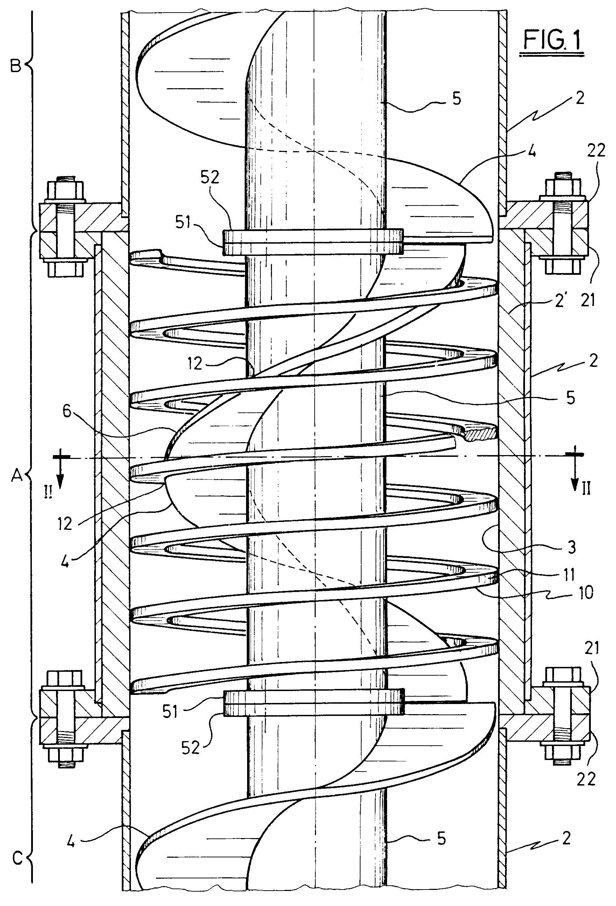

Figure 1 is a partly sectional view on an axial plane of a screw conveyor portion to which the support means of the invention is applied.

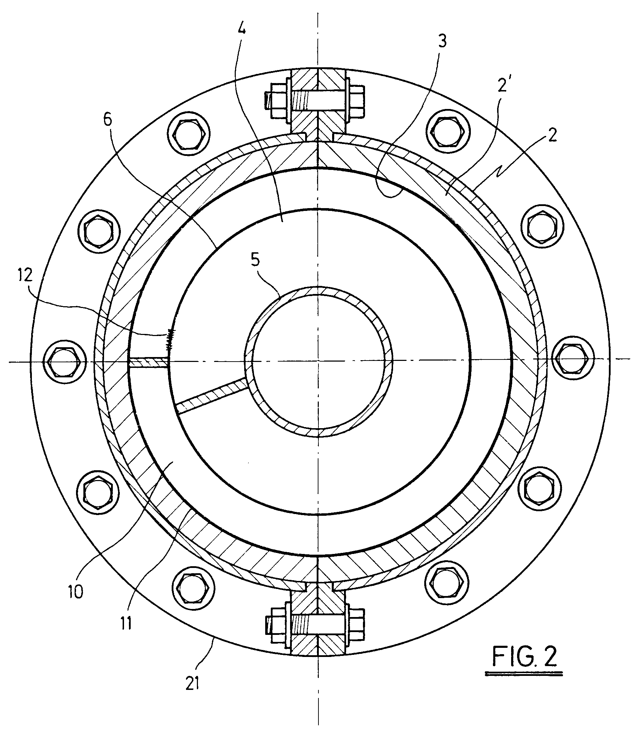

Figure 2 is a section on the line II-II of Figure 1.

The screw conveyor to which the invention is applied comprises a tubular casing 2 with an inner surface of revolution 3, and a coaxial helix 4 (of any type) rotating within and relative to the tubular casing 2.

The inner surface 3 is usually a cylindrical surface, but can be of a different form, for example it can comprise frusto-conical portions. Furthermore in the case of a screw of horizontal or relatively slightly inclined axis, the tubular casing may be of channel type open at the top.

In the figures the reference numeral 5 indicates the shaft about which the helix 4 is wound.

According to the invention, in order to achieve rotary engagement between the helix 4 and the tubular casing 2 along a predetermined axial portion A of the screw, there is provided at least one supplementary element 10 joined rigidly to the peripheral edge 6 of the screw 4.

Said element 10 has a longitudinal extension, ie a length, which is much greater than the other dimensions. It is wound as a cylindrical spiral about the helix 4 with its inclination in the same direction as this latter and with its turns spaced apart. In other words, the element 10 defines a second helix which is relatively narrow in both the axial and the radial direction, it being wound about and fixed to the helix 4 and inclined in the same direction as this latter, although with a different angle of inclination.

The element 10 is fixed, for example by welding, to the edge 6 of the helix 4 at those points (indicated by 12 in the figures) at which its spiral path encounters the path of the helix 4.

The element 10 comprises an outer edge 11 which extends throughout the entire length of the element 10 and is tangential to a surface of revolution substantially mating with the inner surface 3 of the tubular casing 2 along the axial portion A. The element 10 is in sliding contact with the inner surface 3 of the casing 2 via said outer radial edge 11.

In operation, rotary engagement exists between the casing 2 and the helix 4 via the element 10 which slides along the inner surface 3 and maintains the helix 4 restrained against radial thrusts in the same manner as a usual shaft with bearing.

The element 10 is provided only along that axial determined length portion A for which rotary engagement between the helix 4 and the casing 2 is to be achieved.

The helix 4 is also present within the portion A, with obvious considerable advantages for the proper operation of the screw. In addition, the element 10 is substantially in the form of a supplementary helix and hence contributes to conveying the material.

Preferably, the axial dimension of the cross-section through the element 10 is relatively small and the pitch of the helix defined by it is also relatively small and is less than the pitch of the helix 4. The reason for this is that it has been found advantageous, for the conveying of the material, if the cross-section through the element 10 is of relatively small axial dimension (of the order of a few millimetres) and if the turns of the helix defined by it are spaced apart, and that in order not to have excessive pressure between the mutually contacting surfaces of the element 10 and the casing 2 the element 10 must have a relatively large longitudinal dimension and preferably limited within an axial portion of not excessive length.

Optimum results have been obtained with an element 10 having an axial cross-sectional dimension of a few millimetres, in which the pitch of its helix is between 20 and 40 mm and the portion A is between 20 and 30 cm.

In addition, conveniently the cross-section through the element 10 is constant. This cross-section can be rectangular (as in the case illustrated in the figures), in which case the outer edge 11 of contact with the inner surface 3 has a discrete axial dimension; or the surface can be circular in which case the contact edge 11 is limited geometrically to the most external longitudinal generatrix of the element 10.

In the embodiment illustrated in the figures, the axial portion A of inner surface 3 containing the support means for the helix 4 is of cylindrical shape. Consequently the element 10 extends as a cylindrical helix mating with the surface portion 3. This is the most frequently occurring case.

However the portion A of the surface 3 can be of different form, such as frusto-conical; in this case the element 10 extends as a mating frusto-conical helix.

In addition, several mutually parallel elements 10 can be provided within the portion A, to define a multi-start supplementary helix.

In the embodiment shown in the figures, the portion A of the helix 4 together with the relative shaft 5 is made separable from the helix and shaft portions B and C provided upstream and downstream thereof, to allow maintenance and replacement to be carried out following wear of the element 10.

In particular, for this purpose, the two ends of the shaft 5 of the portion A are provided with flanges 51 connected to corresponding flanges 52 provided at the ends of the portions B and C.

Likewise, to achieve easy access to the portion A comprising the element 10, the corresponding portion A of the casing 2 is made separable from the remaining portions B and C of the casing by outwardly projecting flanges 21 and 22. In addition the portion A of the casing 2 is in the form of two axially separable shells.

Preferably, the portion A of the helix 4 has a greater pitch than the portions B and C of the helix 4 to achieve within the portion A the same throughput as in the rest of the screw, taking account of the lesser diameter of the helix 4 within the portion A (because of the presence of the element 10) and the geometrical shape of the element 10.

Conveniently, within the portion A the casing 2 is lined internally with a layer 2' of antifriction material, the inner surface of which defines the surface 3 in sliding contact with the element 10. Said layer 2' consists for example of highly filled polyethylene.

Alternatively, axially extending inserts are provided on the inner surface of the casing 2, the element 10 then sliding on their inner surface.

The element 10 is conveniently of metal construction.

The support according to the invention has proved to be of very effective operation with regard to its material conveying capacity, to the extent that the screw portion A comprising the support behaves substantially as the remaining screw portions which are free of any support. The rotary engagement restraint provided by the support is effective in the same manner as the usual intermediate supports, and the wear between the element 10 and the inner surface 3 of the tubular casing 2 has proved as acceptable as the usual intermediate supports.

Summarizing, using the illustrated support means, both the volumetric and the mechanical efficiency of the screw are increased and in addition it becomes possible, even if the screw is vertical, to raise substantially any type of material which can be conveyed by a screw without an intermediate support.

Numerous modifications of a practical and applicational nature can obviously he made to the invention.

## Claims

1. A helix support means, in particular an intermediate support means, for screw conveyors comprising a tubular casing (2) provided with an inner surface (3) of revolution, and a coaxial helix (4) rotating within and relative to the tubular casing (2), characterised in that along a determined axial portion (A) in which rotary engagement is required between the tubular casing (2) and the helix (4) there is provided at least one longitudinally extending supplementary element (10) spirally wound about the screw helix (4) with the same direction of inclination as this latter and with its turns spaced apart, said supplementary element (10) having its longitudinal outer edge (11) tangential to a surface of revolution substantially mating with the inner surface (3) of the tubular casing (2) within the same axial portion (A), said supplementary element (10) being rigidly joined to the screw helix (4) and being in sliding contact with the inner surface (3) of the tubular casing (2).

2. A device as claimed in claim 1, characterised in that the axial dimension of the cross-section through said supplementary element (10) is relatively small, the pitch of the helix defined by it being conveniently small and less than the pitch of the screw helix (4) but such that the turns defined by it are spaced apart.

3. A means as claimed in claim 1, characterised in that within the axial portion (A) involving the supplementary element (10), the tubular casing (2) is lined internally with a layer (2') of antifriction material, the inner surface of which defines the surface (3) in sliding contact with the supplementary element (10).

4. A means as claimed in claim 1, characterised in that said supplementary element (10) has a constant cross-section.
